# FASCICULE DE BREVET EUROPEEN

(11) **EP 3 481 723 B1**
(45) Date de publication et mention de la délivrance du brevet: **29.04.2020**
(21) Numéro de dépôt: 17751796.8
(22) Date de dépôt: 11.07.2017
(51) Int. Cl.: B64D 27/26

(54) **DISPOSITIF DE PROPULSION POUR UN AÉRONEF, TEL PAR EXEMPLE QU'UN TURBOPROPULSEUR**
ANTRIEBSVORRICHTUNG FÜR EIN LUFTFAHRZEUG WIE ETWA EIN TURBOPROPTRIEBWERK
PROPULSION DEVICE FOR AN AIRCRAFT, SUCH AS A TURBOPROP ENGINE FOR EXAMPLE

(30) Priorité: 11.07.2016 FR 1656639
(43) Date de publication de la demande: 15.05.2019
(73) Titulaire: Safran Aircraft Engines, 75015 Paris (FR)
(72) Inventeur: NICK, Geoffroy Marie Gérard, 77550 Moissy-Crayamel (FR); EL GHANNAM, Nora, 77550 Moissy-Crayamel (FR); SANTIN, Mathieu, Jean Jacques, 77550 Moissy-Crayamel (FR)
(74) Mandataire: Robert, Mathias
(86) Numéro de dépôt international: PCT/FR2017/051904
(87) Numéro de publication internationale: WO 2018/011519

(56) Documents cités:
- WO-A1-97/43561
- WO-A2-2015/074043
- FR-A1- 2 916 736

## Description

La présente invention concerne un dispositif de propulsion pour un aéronef, tel par exemple qu'un turbopropulseur.

Un dispositif de propulsion comporte classiquement un générateur de couple entraînant un arbre de sortie couplé en rotation à un propulseur, par l'intermédiaire d'une boîte de transmission de puissance.

Le générateur de couple est par exemple une turbomachine, dans le cas d'un turbopropulseur, ou un moteur à pistons, le propulseur étant généralement une hélice comportant des pales équipées ou non de moyens de calage des pales permettant d'ajuster la position angulaire des pales.

Le générateur de couple est fixé à un bâti ou berceau, par l'intermédiaire de liaisons souples formées par exemple par des isolateurs. Le bâti permet de suspendre le dispositif de propulsion à une structure de l'aéronef, par exemple au niveau d'une aile ou encore sur un pylône attaché au fuselage.

La boîte de transmission de puissance, également désignée par l'acronyme anglais PGB (Power Gear Box), est une boîte de vitesses visant à réduire la vitesse de rotation de l'arbre du générateur de couple, de façon à entraîner l'arbre de sortie équipé du propulseur.

La boîte de transmission de puissance comporte un carter et par exemple un train épicycloïdal comprenant un planétaire entrainant en rotation des satellites montés sur un porte satellite et tournant à l'intérieur d'une couronne dentée du train épicycloïdal. Ledit carter est monté sur le bâti par l'intermédiaire de liaisons souples formées par exemple par des isolateurs.

Les isolateurs permettent d'isoler les vibrations générées en fonctionnement, de manière à réduire le bruit ou les phénomènes de fatigue.

Le document FR 2 916 736 A1 divulgue un turbopropulseur dont le carter de la boîte de transmission est monté sur un bâti par l'intermédiaire d'un dispositif d'amortissement hydraulique.

Afin d'assurer la régulation du dispositif de propulsion, il est nécessaire de prendre en compte le couple transmis à l'arbre de sortie entraînant le propulseur, c'est-à-dire l'hélice.

Pour cela, la méthode utilisée actuellement consiste à mesurer la torsion de l'arbre reliant la sortie du générateur de couple et l'entrée de la boîte de transmission de puissance, qu'on appellera arbre intermédiaire, afin d'en estimer avec précision le couple généré par le générateur et transmis au travers de la PGB au niveau de l'arbre de sortie.

Cette méthode présente les inconvénients suivants.

Le capteur de torsion doit être intégré sur l'arbre intermédiaire, de sorte qu'il convient de le rallonger, ce qui pose des contraintes d'encombrement et nécessite une adaptation de l'architecture générale du dispositif de propulsion. Par ailleurs, une telle mesure permet uniquement de mesurer le couple en entrée de la boîte de transmission de puissance, et non en sortie comme cela est requis pour la régulation. Il faut donc calculer le couple disponible sur le propulseur. Ces deux couples ne sont pas identiques, car il existe des pertes dues au comportement statique et dynamique de la boîte de transmission de puissance, en particulier dues aux frottements lors du fonctionnement de la boîte de transmission de puissance, à la température, à la circulation d'huile ou encore à la flexion mécanique des différents composants, ces pertes étant difficilement estimables. Il existe également des pertes dues au prélèvement de puissance par des accessoires montés sur la boîte de transmission de puissance, ces pertes pouvant éventuellement être estimées. Ces différentes pertes peuvent faire dériver de manière non linéaire la relation entre le couple généré au niveau de l'arbre de sortie et le couple généré au niveau de l'arbre intermédiaire.

Par ailleurs, la mesure de torsion de l'arbre intermédiaire est sensible à l'intégration et au montage des différents éléments du système de mesure. Lors d'une opération de maintenance, il est fréquemment nécessaire de déposer le générateur du couple du reste du dispositif. L'utilisation d'un système de mesure complexe au niveau de l'arbre intermédiaire augmente la complexité et le temps d'une telle dépose et du remontage de l'ensemble, d'une part, et nécessite un réétalonnage du capteur, d'autre part, pour chaque opération de dépose du générateur de couple.

L'invention a notamment pour but d'apporter une solution simple, efficace et économique à ces problèmes.

A cet effet, elle propose un dispositif de propulsion pour un aéronef, tel par exemple qu'un turbopropulseur, comportant un générateur de couple entraînant un arbre de sortie par l'intermédiaire d'une boîte de transmission de puissance, l'arbre de sortie étant couplé en rotation à un propulseur, ladite boîte de transmission de puissance étant fixée sur un bâti par l'intermédiaire de moyens de suspension, lesdits moyens de suspension comportant des moyens hydrauliques de reprise de couple comprenant au moins un premier système hydraulique et un second système hydraulique écartés l'un de l'autre, chaque système hydraulique comportant une chambre de pression dont le volume varie en fonction de la position du carter de la boîte de transmission de puissance par rapport au bâti, les chambres de pression des systèmes hydrauliques étant reliées par un capillaire de sorte qu'un fluide hydraulique est apte à circuler d'une chambre de pression à l'autre par l'intermédiaire du capillaire, caractérisé en ce qu'il comporte des moyens de mesure de la pression du fluide hydraulique au sein de l'une au moins des chambres de pression et/ou au sein du capillaire et des moyens de détermination du couple transmis au propulseur au travers de l'arbre de sortie, en fonction notamment de la pression du fluide hydraulique.

Il s'avère que la pression du fluide hydraulique présent dans les chambres de pression et dans le capillaire est une fonction au premier ordre du couple exercé par le carter de la boîte de transmission de puissance sur le bâti ou berceau du dispositif. Ce couple est représentatif du couple recherché, à savoir du couple généré au niveau de l'arbre de sortie, qu'on appellera couple de sortie. Les pertes précitées générées lors du fonctionnement de la boîte de transmission de puissance n'entrent donc plus en compte dans le calcul du couple de sortie.

Dans le cas où la boîte de transmission de puissance comporte un train épicycloïdal où le planétaire engrène avec les satellites montés sur un porte-satellite et tournant à l'intérieur d'une couronne dentée, le couple mesuré est égal au couple transmis par la boîte de transmission de puissance au bâti ou berceau du dispositif de propulsion. Suivant le mode de fixation du sous-ensemble, formé par la boîte de transmission de puissance et le générateur de couple, au bâti, le couple mesuré - qui est égal au couple transmis par la boîte de transmission de puissance au bâti - correspond au couple de sortie recherché ou est égal à une fraction connue ou déterminable (par exemple 80%) du couple de sortie recherché, pour les raisons expliquées après.

L'invention permet donc d'augmenter la fiabilité de la mesure, en utilisant des moyens de mesure peu complexes, qui peuvent être facilement intégrable sur la structure existante du dispositif de propulsion supportant le générateur de couple et la boîte de transmission de puissance, sans avoir besoin d'augmenter la longueur de l'arbre intermédiaire. De tels moyens de mesure ne nécessitent pas non plus d'opération de réétalonnage en cas de dépose du générateur de couple ou de la PGB, lors d'une opération de maintenance.

Le fluide hydraulique est par exemple de l'huile.

Les moyens de mesure de la pression du fluide hydraulique peuvent comporter un capteur de pression relative ou un capteur de pression absolue.

Si le capteur de pression est du type relatif, la pression mesurée est comparée à une pression de référence qui peut être par exemple la pression de l'air extérieur au dispositif de propulsion.

Un capteur de pression absolu, s'il permet une mesure directe de la pression réelle, est plus onéreux et nécessite une maintenance plus importante.

A l'inverse, un capteur de pression relative est moins cher et plus fiable, mais ne permet pas une mesure directe de la pression réelle du fluide hydraulique. Un tel capteur permet de comparer la pression du fluide hydraulique à une pression de référence. Si l'on choisit d'utiliser la pression de l'air extérieur au dispositif de propulsion par exemple, il conviendra de tenir compte de la variation de cette pression extérieure en fonction notamment de l'altitude et/ou de la température par exemple. Une telle adaptation est cependant peu complexe à mettre en œuvre puisque les différents paramètres sont déjà mesurés par le système de régulation du moteur. De préférence, la pression de référence est une pression qui ne varie pas au cours d'un cycle d'utilisation du dispositif de propulsion.

Un ou plusieurs capteurs de pression peuvent être situés en différents endroits des chambres de mesure et/ou du capillaire. De préférence, on utilise un seul capteur, afin de limiter les coûts.

Les moyens de suspension peuvent comporter au moins un isolateur monté entre le bâti et le carter de la boîte de transmission de puissance.

L'isolateur est par exemple formé par un organe en matériau élastomère, de type silentbloc.

Dans ce cas, il peut apparaître plus aisé de placer le capteur de mesure au niveau du capillaire reliant les chambres de pression, afin de ne pas modifier la structure de l'isolateur.

Chaque système hydraulique peut comporter un cylindre relié au bâti et un piston monté de façon mobile dans le cylindre et délimitant avec ledit cylindre la chambre de pression, le piston étant relié au carter de la boîte de transmission de puissance.

De par sa faible section le capillaire permet la circulation du fluide entre les deux cylindres pour les circulations de fluide à faible vitesse, c'est à dire pour les rotations de faible fréquence générées par les variations de couple du moteur, typiquement entre 0Hz et 10Hz. Dans ce mode de fonctionnement, les deux chambres de pression sont en opposition et contrent la rotation de la PGB, la pression de réaction dans les chambres de pression augmentant proportionnellement à la rotation de la PGB. Les isolateurs n'interviennent pas dans le système de suspension. Au-delà de la fréquence précitée, le capillaire se bloque, le système hydraulique est ouvert et la compressibilité du fluide dans les chambres de pression s'ajoute à la raideur des isolateurs. La pression dans chacun des cylindres se compose alors d'une valeur statique due au couple exercé par le carter de la PGB dans sa composante basse fréquence et d'une composante dynamique plus haute fréquence générée par les vibrations de la PGB et du bâti, affectée par la compressibilité du fluide et la raideur dynamique des isolateurs. La forme et les dimensions des chambres de pression et du capillaire sont donc adaptées en conséquence, en fonction du type d'événement transitoire à détecter.

Les deux chambres de pression peuvent être situées de part et d'autre d'un plan axial médian s'étendant selon l'axe de sortie.

Les moyens de détermination du couple transmis au propulseur sont aptes à prendre en compte des paramètres d'environnement ou de fonctionnement du dispositif de propulsion, tels par exemple que la température et/ou la pression de l'air extérieur au dispositif, l'altitude, les paramètres de vol, la température du fluide hydraulique, etc.

Ces paramètres d'entrée peuvent alors être utilisés par les moyens de calcul afin d'ajuster la détermination du couple de sortie.

Le capillaire et/ou les chambres de pression peuvent être dimensionnés de façon à contrer des oscillations de couple dont la fréquence s'étend jusqu'à 5 Hz, de préférence jusqu'à 10 Hz.

Au-delà de cette fréquence limite, la mesure de la pression n'est pas affectée par les vibrations. C'est ainsi notamment que, en vol, le bâti qui supporte l'ensemble propulsif est soumis à un moment de flexion de sorte que le bâti vibre à des fréquences supérieures à 10Hz. Ces vibrations sont amorties par les isolateurs par exemple et n'affectent pas la qualité de la mesure de pression statique du fluide hydraulique.

Le dispositif peut comporter un capteur de température du fluide hydraulique, couplé par exemple au capteur de pression précité, les moyens de détermination du couple transmis au propulseur au travers de l'arbre de sortie étant aptes à prendre en compte la pression et la température du fluide hydraulique.

L'invention concerne en outre un procédé de détermination du couple transmis à l'arbre de sortie d'un dispositif de propulsion du type précité, caractérisé en ce qu'il comporte les étapes consistant à :
(a) mesurer la pression du fluide hydraulique dans la chambre de pression et/ou dans le capillaire,
(b) déterminer par calcul le couple transmis au propulseur au travers de l'arbre de sortie, en fonction notamment de la pression du fluide hydraulique.

Lors du démarrage du dispositif et/ou lors du fonctionnement du dispositif dans un mode ralenti, la pression du fluide hydraulique peut être mesurée de façon à définir une valeur de référence prise en compte dans l'étape (b) afin de calculer le couple transmis au propulseur au travers de l'arbre de sortie.

Lors du démarrage du dispositif de propulsion et/ou lors du fonctionnement dudit dispositif dans un mode ralenti, les pales du propulseur peuvent être positionnées selon un angle de calage correspondant à une position dite en drapeau, visant à minimiser voire annuler la poussée exercée par le turboréacteur. Lors d'un tel démarrage ou d'un tel fonctionnement en mode ralenti, la poussée exercée par le dispositif est ainsi nulle ou tout du moins insuffisante pour mouvoir l'aéronef.

La mesure de pression réalisée dans un tel mode de fonctionnement offre une valeur de référence permettant de recaler l'ensemble des valeurs de mesure en cas de dérive de celles-ci.

Par ailleurs, la suspension de la boîte de transmission de puissance et du générateur de couple peut être réalisée en au moins deux zones ou cadres écartés axialement, respectivement un cadre avant situé à proximité du propulseur, et un cadre arrière situé par exemple au niveau de la turbine basse pression lorsque le générateur de couple est une turbomachine. Classiquement, le couple généré est repris à environ 80% au niveau du cadre avant et à environ 20% au niveau du cadre arrière. En d'autres termes, le couple de réaction exercé par le carter de la boîte de transmission de puissance sur le bâti, en particulier sur le cadre avant du bâti, correspond à environ 80% du couple généré au niveau de l'arbre de sortie dans ce cas. Le ratio entre le couple transitant par le cadre avant et celui passant par le cadre arrière peut varier selon les modes de fonctionnement du moteur et selon l'architecture du moteur.

Ainsi, afin de déterminer par calcul le couple de sortie à l'aide d'une mesure de pression du fluide hydraulique, il peut également convenir de tenir compte de la répartition des efforts entre les différentes zones dans lesquelles sont situés les moyens de suspension.

Une telle répartition peut être mesurée sur un banc d'essai, une telle opération étant déjà réalisée à l'heure actuelle, ce qui ne nécessite donc pas de surcoût par rapport aux méthodes actuelles. La courbe d'étalonnage ainsi obtenue est notamment fonction de la raideur du bâti et de la raideur des isolateurs. Cette courbe d'étalonnage ne dépend pas du générateur de couple en lui-même de sorte qu'il n'est pas nécessaire de procéder à un nouvel étalonnage en cas de changement ou de dépose du générateur de couple lors d'une opération de maintenance.

Une telle opération d'étalonnage doit cependant être réalisée en cas de changement de tout ou partie des moyens de suspension par exemple, cette opération d'étalonnage étant de toute façon réalisée pour d'autres raisons dans un tel cas.

Les paramètres établis lors de l'étalonnage doivent être transmis au calculateur qui est généralement associé au générateur de couple.

Le dispositif de propulsion peut comporter au moins une puce comportant une mémoire, par exemple une puce de type RFID, dans laquelle sont stockés des paramètres de calibration destinés à être intégrés dans le calculateur associé à un nouveau générateur de couple, en cas de changement ou de maintenance dudit générateur de couple.

Dans le cas d'une opération de maintenance nécessitant un changement du générateur de couple, les différents paramètres de calibration doivent être intégrés au calculateur associé à un nouveau générateur de couple. L'utilisation d'une telle puce permet de faciliter cette étape.

La puce peut être apposée sur le bâti ou sur les systèmes hydrauliques.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 sont des vues schématiques de face d'un dispositif de propulsion pour un aéronef, selon une forme de réalisation de l'invention,
- la figure 3 est une vue schématique, de l'avant, d'une partie du dispositif de propulsion.

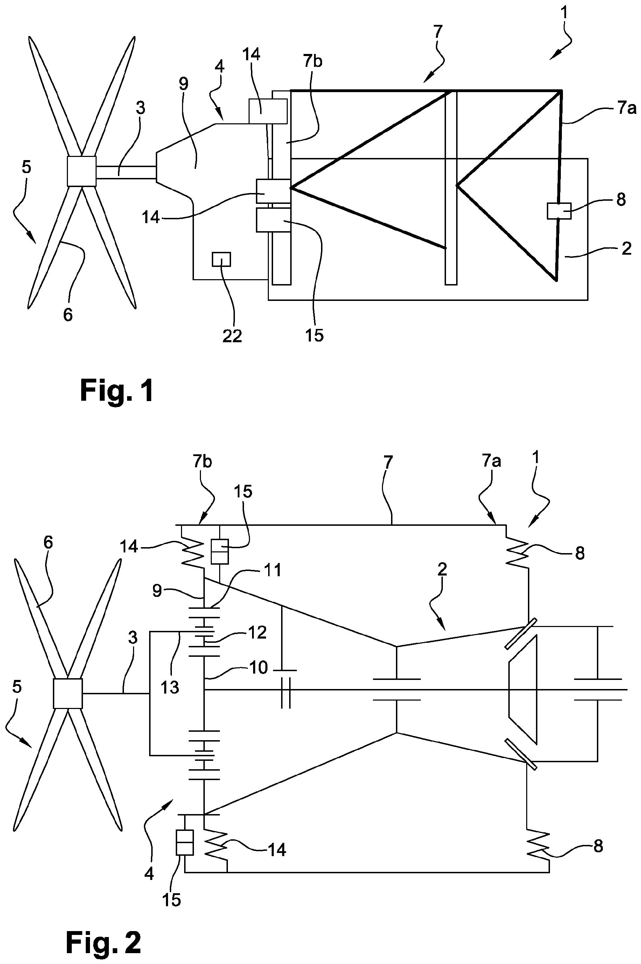

Les figures 1 à 3 illustrent un dispositif de propulsion 1 pour un aéronef, selon une forme de réalisation de l'invention.

Ce dispositif de propulsion 1 pour un aéronef comporte un générateur de couple 2 entraînant un arbre de sortie 3 par l'intermédiaire d'une boîte de transmission de puissance 4, l'arbre de sortie 3 étant couplé en rotation à un propulseur 5.

Le générateur de couple 2 est ici une turbomachine, le propulseur 5 étant une hélice comportant des pales 6 équipées de moyens de calage des pales 6 permettant d'ajuster la position angulaire des pales 6 autour de leur axe orienté perpendiculairement à l'axe de sortie 3.

Le générateur de couple 2 est fixé à un bâti ou berceau 7, plus particulièrement à un cadre dit arrière 7a du bâti 7, par l'intermédiaire d'isolateurs 8. Le bâti 7 permet de suspendre le dispositif de propulsion 1 à une structure de l'aéronef, par exemple au niveau d'une aile ou encore sur un pylône attaché au fuselage (non représentés).

La boîte de transmission de puissance 4, également désignée par l'acronyme anglais PGB (Power Gear Box), est une boîte de vitesses visant à réduire la vitesse de rotation de l'arbre du générateur de couple 2, de façon à entraîner l'arbre de sortie 3 équipé du propulseur 5.

La boîte de transmission de puissance 4 comporte un carter 9 et un train épicycloïdal comprenant un planétaire 10 et une couronne dentée 11, engrenant avec des satellites 12 (figure 2). L'arbre de sortie 3 est solidaire en rotation d'un porte-satellites 13, ce dernier portant des axes autour desquels les satellites 12 sont montées pivotants. Le carter 9 est monté sur un cadre dit avant 7b du bâti ou du berceau 7 par l'intermédiaire d'isolateurs 14 et de systèmes hydrauliques 15.

Lesdits isolateurs 8, 14, permettent d'éviter ou de limiter la transmission des vibrations générées en fonctionnement, afin notamment de réduire le bruit ou les phénomènes de fatigue.

Les isolateurs 8, 14 sont ici des plots élastiques en matériau élastomère, formant des silentblocs.

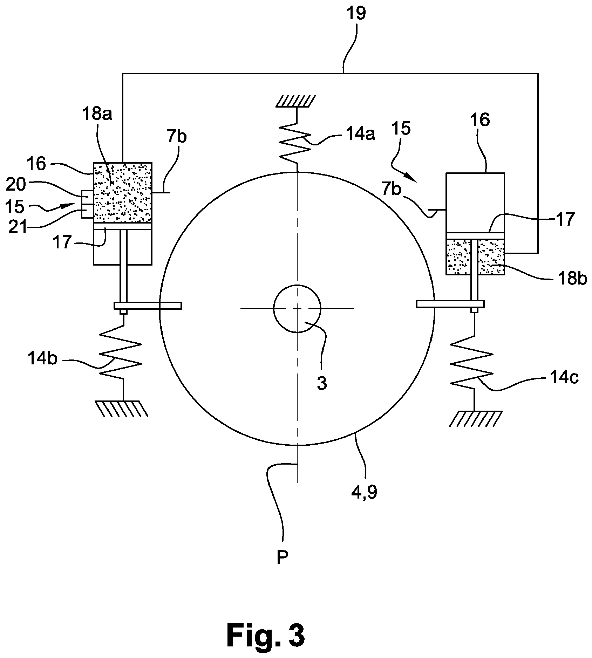

Les isolateurs 14 équipant le cadre avant 7b sont par exemple au nombre de trois et sont placés dans des zones situées respectivement à 9h, à 12h et à 3h, par analogie avec le cadran d'une horloge. En d'autres termes, un premier isolateur 14a (figure 3) est placé sur un plan médian axial P passant par l'axe de sortie 3, un deuxième et un troisième isolateurs 14b, 14c étant placés de part et d'autre dudit plan médian P, de façon symétrique, comme cela est visible à la figure 3.

Les systèmes hydrauliques 15, au nombre de deux et placés dans les zones situées à 3h et 9h par exemple, comportent chacun un cylindre 16 dans lequel un piston 17 est monté de façon mobile, le cylindre et le piston délimitant une chambre de pression 18a, 18b.

Chaque cylindre 16 est relié au bâti 7 ou respectivement au carter 9 de la boîte de transmission de puissance 4, chaque piston 17 étant relié au carter 9 de la boîte de transmission de puissance 4 ou respectivement au bâti 7.

Les chambres de pression 18a, 18b sont reliées par un capillaire 19 et remplies d'un fluide hydraulique de sorte que, lors du déplacement (en particulier lors de la rotation autour de l'axe de sortie) du carter 9 de la boîte de transmission de puissance 4 par rapport au bâti 7, le fluide hydraulique s'écoule d'une chambre de pression 18a à l'autre 18b au travers du capillaire 19, à la manière de vases communicants. Les deux chambres 18a, 18b sont ainsi en opposition et les volumes desdites chambres 18a, 18b varient simultanément, le fluide hydraulique s'opposant à la rotation autour de l'axe de sortie du carter 9 de la boîte de transmission de puissance 4 par rapport au bâti 7.

Le fluide hydraulique est par exemple de l'huile.

La chambre de pression 18a, la chambre de pression 18b et/ou le capillaire 19 sont équipés d'au moins un capteur de pression 20 et/ou d'au moins un capteur de température 21 aptes à mesurer respectivement la pression et la température du fluide hydraulique.

Le capteur de pression 20 est un capteur de type absolu ou un capteur de type relatif, la pression de référence étant par exemple l'air extérieur au dispositif de propulsion 1.

De préférence, seule l'une des chambres de pression 18a, 18b est équipée d'un capteur de pression 20 et d'un capteur de température 21 regroupés sous la forme d'un seul et même module de mesure.

Comme indiqué précédemment, la pression du fluide hydraulique présent dans les chambres de pression 18a, 18b et dans le capillaire 19 est une fonction au premier ordre du couple exercé par le carter 9 de la boîte de transmission de puissance 4 sur le bâti ou berceau 7 du dispositif 1. Ce couple est représentatif du couple de sortie recherché, à savoir du couple généré au niveau de l'arbre de sortie 3.

Il est dès lors possible de déterminer par calcul, à l'aide d'un algorithme, le couple de sortie à partir de la mesure de la pression du fluide hydraulique.

D'autres paramètres peuvent également être pris en compte par l'algorithme, notamment des paramètres d'environnement ou de fonctionnement du dispositif de propulsion, tels par exemple que la température et/ou la pression de l'air extérieur au dispositif, l'altitude ou encore les paramètres de vol.

Les isolateurs 8, 14 sont destinés à absorber les oscillations de couple ou les vibrations de haute fréquence, par exemple supérieure à 10 Hz, et les systèmes hydrauliques 15 sont destinés à contrer les oscillations de couple de faible fréquence, par exemple entre 0 et 10 Hz pour éviter une contrainte statique excessive sur les plots élastiques. La mesure de la pression reflète donc la valeur du couple « statique » au niveau de l'arbre de sortie 3, mais est également apte à mesurer des pics de couple générés par des événements transitoires, pour autant que ces pics ont une bande passante compatible avec celle des chambres de pression 18a, 18b et du capillaire 19. La forme et les dimensions des chambres de pression 18a, 18b du capillaire 19 sont donc adaptées en conséquence, en fonction du type d'événement transitoire à détecter.

Le dispositif de propulsion 1 peut comporter au moins une puce 22 (figure 1) comportant une mémoire, par exemple une puce de type RFID, dans laquelle sont stockés des paramètres de calibration destinés à être intégrés dans le calculateur associé à un nouveau générateur de couple 2, en cas de changement ou de maintenance dudit générateur de couple 2. La puce 22 est par exemple apposée sur le carter 9 de la boîte de transmission de puissance 4.

Comme indiqué précédemment, dans le cas d'une opération de maintenance nécessitant un changement du générateur de couple 2, les différents paramètres de calibrations doivent être intégrés au calculateur associé à un nouveau générateur de couple 2. L'utilisation d'une telle puce 22 permet de faciliter cette étape.

En fonctionnement, il convient de réguler le générateur de couple. Pour cela, celui-ci est équipé d'un ordinateur embarqué habituellement désigné sous l'acronyme anglais EEC (« Electronic Engine Control »).

Un élément important pour une telle régulation est le calcul du couple de sortie, c'est-à-dire le couple généré au niveau de l'arbre de sortie 3.

Pour cela, comme indiqué précédemment, on utilise les mesures de température et de pression du fluide hydraulique ainsi que les paramètres précités d'environnement ou de fonctionnement du dispositif de propulsion. Comme indiqué précédemment, on utilise également la courbe d'étalonnage obtenue lors des tests et visant notamment à déterminer le pourcentage ou la fraction dudit couple de sortie transitant au travers des cylindres hydrauliques 15 et du cadre avant 7b.

L'invention propose ainsi un procédé et un dispositif de propulsion 1 permettant une régulation efficace du générateur de couple à partir du couple généré au niveau du propulseur 5.

## Revendications

1. Dispositif de propulsion (1) pour un aéronef, tel par exemple qu'un turbopropulseur, comportant un générateur de couple (2) entraînant un arbre de sortie (3) par l'intermédiaire d'une boîte de transmission de puissance (4), l'arbre de sortie (3) étant couplé en rotation à un propulseur (5), ladite boîte de transmission de puissance (4) étant fixée sur un bâti (7) du dispositif de propulsion (1) par l'intermédiaire de moyens de suspension (8, 14, 15), lesdits moyens de suspension comportant des moyens hydrauliques de reprise de couple comprenant au moins un premier système hydraulique (15) et un second système hydraulique (15) écartés l'un de l'autre, chaque système hydraulique (15) comportant une chambre de pression (18a, 18b) dont le volume varie en fonction de la position du carter (9) de la boîte de transmission de puissance (4) par rapport au bâti (7), les chambres de pression (18a, 18b) des systèmes hydrauliques (15) étant reliées par un capillaire (19) de sorte qu'un fluide hydraulique est apte à circuler d'une chambre de pression (18a) à l'autre (18b) par l'intermédiaire du capillaire (19), **caractérisé en ce qu'**il comporte des moyens (20) de mesure de la pression du fluide hydraulique au sein de l'une au moins des chambres de pression (18a, 18b) et/ou au sein du capillaire (19) et des moyens de détermination du couple transmis au propulseur (5) au travers de l'arbre de sortie (3), en fonction de la pression du fluide hydraulique.

2. Dispositif de propulsion (1) selon la revendication 1, **caractérisé en ce que** les moyens de suspension comportent au moins un isolateur (14) monté entre le bâti (7) et le carter (9) de la boîte de transmission de puissance (4).

3. Dispositif de propulsion (1) selon la revendication 1 ou 2, **caractérisé en ce que** chaque système hydraulique (15) comporte un cylindre (16) relié au bâti (7) et un piston (17) monté de façon mobile dans le cylindre (16) et délimitant avec ledit cylindre (16) la chambre de pression (18a, 18b), le piston (17) étant relié au carter (9) de la boîte de transmission de puissance (4).

4. Dispositif de propulsion (1) selon l'une des revendications 1 à 3, **caractérisé en ce que** les deux chambres de pression (18a, 18b) sont situées de part et d'autre d'un plan axial médian (P) s'étendant selon l'arbre de sortie (3).

5. Dispositif de propulsion (1) selon l'une des revendications 1 à 4, **caractérisé en ce que** les moyens de détermination du couple transmis au propulseur (5) sont aptes à prendre en compte des paramètres d'environnement ou de fonctionnement du dispositif de propulsion (1), tels par exemple que la température et/ou la pression de l'air extérieur au dispositif (1), l'altitude, les paramètres de vol, la température du fluide hydraulique.

6. Dispositif de propulsion (1) selon l'une des revendications 1 à 5, **caractérisé en ce que** le capillaire (19) et/ou les chambres de pression (18a, 18b) sont dimensionnés de façon à mesurer des oscillations de couple dont la fréquence s'étend jusqu'à au moins 5 Hz, de préférence jusqu'à 10 Hz.

7. Dispositif de propulsion (1) selon l'une des revendications 1 à 6, **caractérisé en ce qu'**il comporte au moins une puce (22) comportant une mémoire, par exemple une puce de type RFID, dans laquelle sont stockés des paramètres de calibration destinés à être intégrés dans le calculateur associé à un nouveau générateur de couple (2), en cas de changement ou de maintenance dudit générateur de couple (2).

8. Procédé de détermination du couple transmis à l'arbre de sortie d'un dispositif de propulsion (1) selon l'une des revendications 1 à 7, **caractérisé en ce qu'**il comporte les étapes consistant à :
(a) mesurer la pression du fluide hydraulique dans la chambre de pression (18a, 18b) et/ou dans le capillaire (19),
(b) déterminer par calcul le couple transmis au propulseur (5) au travers de l'arbre de sortie (3), en fonction de la pression du fluide hydraulique.

9. Procédé selon la revendication 8, **caractérisé en ce que**, lors du démarrage du dispositif (1) et/ou lors du fonctionnement du dispositif (1) dans un mode ralenti, la pression du fluide hydraulique est mesurée de façon à définir une valeur de référence prise en compte dans l'étape (b) afin de calculer le couple transmis au propulseur (5) au travers de l'arbre de sortie (3).

## Patentansprüche

1. Antriebsvorrichtung (1) für ein Luftfahrzeug, wie etwa Turboproptriebwerk, enthaltend einen Drehmomentgenerator (2), der über ein Kraftübertragungsgetriebe (4) eine Abtriebswelle (3) antreibt, wobei die Abtriebswelle (3) mit einem Propellertriebwerk (5) drehgekoppelt ist, wobei das Kraftübertragungsgetriebe (4) über Aufhängungsmittel (8, 14, 15) an einem Rahmen (7) der Antriebsvorrichtung (1) befestigt ist, wobei die Aufhängungsmittel hydraulische Drehmomentaufnahmemittel umfassen, die mindestens ein erstes Hydrauliksystem (15) und ein zweites Hydrauliksystem (15) umfassen, die voneinander beabstandet sind, wobei jedes Hydrauliksystem (15) eine Druckkammer (18a, 18b) aufweist, deren Volumen in Abhängigkeit von der Position des Gehäuses (9) des Kraftübertragungsgetriebes (4) relativ zum Rahmen (7) variiert, wobei die Druckkammern (18a, 18b) der Hydrauliksysteme (15) durch eine Kapillare (19) verbunden sind, so dass ein Hydraulikfluid über die Kapillare (19) von einer Druckkammer (18a) in die andere (18b) fließen kann,
**dadurch gekennzeichnet, dass**
sie Mittel (20) zur Messung des Drucks des Hydraulikfluids in mindestens einer der Druckkammern (18a, 18b) und/oder in der Kapillare (19) sowie Mittel zur Bestimmung des über die Abtriebswelle (3) auf das Propellertriebwerk (5) übertragenen Drehmoments in Abhängigkeit vom Druck des Hydraulikfluids umfasst.

2. Antriebsvorrichtung (1) nach Anspruch 1,
**dadurch gekennzeichnet, dass**
die Aufhängungsmittel mindestens einen Isolator (14) enthalten, der zwischen dem Rahmen (7) und dem Gehäuse (9) des Kraftübertragungsgetriebes (4) montiert ist.

3. Antriebsvorrichtung (1) nach Anspruch 1 oder 2,
**dadurch gekennzeichnet, dass**
jedes Hydrauliksystem (15) einen mit dem Rahmen (7) verbundenen Zylinder (16) und einen im Zylinder beweglich gelagerten Kolben (17) enthält, der mit dem Zylinder (16) die Druckkammer (18a, 18b) begrenzt, wobei der Kolben (17) mit dem Gehäuse (9) des Kraftübertragungsgetriebes (4) verbunden ist.

4. Antriebsvorrichtung (1) nach einem der Ansprüche 1 bis 3,
**dadurch gekennzeichnet, dass**
die beiden Druckkammern (18a, 18b) beiderseits einer axialen Mittelebene (P) liegen, die sich entlang der Abtriebswelle (3) erstreckt.

5. Antriebsvorrichtung (1) nach einem der Ansprüche 1 bis 4,
**dadurch gekennzeichnet, dass**
die Mittel zum Bestimmen des auf das Propellertriebwerk (5) übertragenen Drehmoments dazu geeignet sind, Umgebungs- bzw. Betriebsparameter der Antriebsvorrichtung (1), wie etwa die Temperatur und/oder den Druck der Außenluft außerhalb der Vorrichtung (1), die Höhe, Flugparameter, die Temperatur des Hydraulikfluids, zu berücksichtigen.

6. Antriebsvorrichtung (1) nach einem der Ansprüche 1 bis 5,
**dadurch gekennzeichnet, dass**
die Kapillare (19) und/oder die Druckkammern (18a, 18b) so bemessen sind, dass sie Drehmomentschwingungen mit einer Frequenz bis mindestens 5 Hz, vorzugsweise bis 10 Hz, messen können.

7. Antriebsvorrichtung (1) nach einem der Ansprüche 1 bis 6,
**dadurch gekennzeichnet, dass**
sie mindestens einen Chip (22) mit einem Speicher, beispielsweise einen Chip vom Typ RFID, enthält, in dem Kalibrierungsparameter gespeichert sind, die im Falle eines Wechsels bzw. einer Wartung des Drehmomentgenerators (2) in den einem neuen Drehmomentgenerator (2) zugeordneten Rechner integriert werden sollen.

8. Verfahren zum Bestimmen des auf die Abtriebswelle einer Antriebsvorrichtung (1) nach einem der Ansprüche 1 bis 7 übertragenen Drehmoments,
**dadurch gekennzeichnet, dass** es die nachstehenden Schritte umfasst:
(a) Messen des Drucks des Hydraulikfluids in der Druckkammer (18a, 18b) und/oder in der Kapillare (19),
(b) rechnerisches Bestimmen des über die Abtriebswelle (3) auf das Propellertriebwerk (5) übertragenen Drehmoments in Abhängigkeit von dem Druck des Hydraulikfluids.

9. Verfahren nach Anspruch 8,
**dadurch gekennzeichnet, dass**
beim Starten der Vorrichtung (1) und/oder beim Betrieb der Vorrichtung (1) im Leerlauf der Druck des Hydraulikfluids gemessen wird, um einen Referenzwert festzulegen, der im Schritt (b) zur Berechnung des über die Abtriebswelle (3) auf das Propellertriebwerk (5) übertragenen Drehmoments herangezogen wird.

## Claims

1. A propulsion device (1) for an aircraft, such as a turboprop, comprising a torque generator (2) driving an output shaft (3) via a power gearbox (4), the output shaft (3) being rotatably coupled to a propeller (5), said power gear box (4) being fixed on a frame (7) of the propulsion device (1) by means of suspension means (8, 14, 15), said suspension means including hydraulic torque recovery means comprising at least a first hydraulic system (15) and a second hydraulic system (15) spaced from each other, each hydraulic system (15) including a pressure chamber (18a, 18b) whose volume varies according to the position of the housing (9) of the power gearbox (4) relative to the frame (7), the pressure chambers (18a, 18b) of the hydraulic systems (15) being connected by a capillary (19) so that a hydraulic fluid is able to flow from one pressure chamber (18a) to the other (18b) via the capillary (19), **characterized in that** it includes means (20) for measuring the pressure of the hydraulic fluid within at least one of the pressure chambers (18a, 18b) and/or within the capillary (19) and means for determining the torque transmitted to the thruster (5) through the output shaft (3), according to the pressure of the hydraulic fluid.

2. The propulsion device (1) according to claim 1, **characterized in that** the suspension means comprise at least one insulator (14) mounted between the frame (7) and the housing (9) of the power gearbox (4).

3. The propulsion device (1) according to claim 1 or 2, **characterized in that** each hydraulic system (15) comprises a cylinder (16) connected to the frame (7) and a piston (17) movably mounted in the cylinder (16) and delimiting with said cylinder (16) the pressure chambers (18a, 18b), the piston (17) being connected to the housing (9) of the power gearbox (4).

4. The propulsion device (1) according to one of claims 1 to 3, **characterized in that** the two pressure chambers (18a, 18b) are located on either side of a median axial plane (P) extending along the output shaft (3).

5. The propulsion device (1) according to one of claims 1 to 4, **characterized in that** the means for determining the torque transmitted to the propeller (5) are capable of taking into account environmental or operating parameters of the propulsion device (1), such as for example the temperature and/or pressure of the air outside the device (1), altitude, flight parameters, hydraulic fluid temperature.

6. The propulsion device (1) according to one of claims 1 to 5, **characterized in that** the capillary (19) and/or the pressure chambers (18a, 18b) are designed to measure torque oscillations whose frequency extends up to at least 5 Hz, preferably up to 10 Hz.

7. The propulsion device (1) according to one of claims 1 to 6, **characterized in that** it comprises at least one chip (22) comprising a memory, for example an RFID chip, in which calibration parameters are stored for integration in the ECU associated with a new torque generator (2), in the event of a change or maintenance of said torque generator (2).

8. A process for determining the torque transmitted to the output shaft of a propulsion device (1) according to one of claims 1 to 7, **characterised in that** it includes the steps consisting of:
(a) measuring the pressure of the hydraulic fluid in the pressure chamber (18a, 18b) and/or capillary (19),
(b) determining by calculation the torque transmitted to the propeller (5) through the output shaft (3), according to the pressure of the hydraulic fluid.

9. The method according to claim 8, **characterized in that**, when starting the device (1) and/or when operating the device (1) in an idle mode, the pressure of the hydraulic fluid is measured in such a way as to define a reference value taken into account in step (b) in order to calculate the torque transmitted to the thruster (5) through the output shaft (3).
